# EUROPÄISCHE PATENTSCHRIFT

(11) **EP 2 860 013 B1**
(45) Veröffentlichungstag und Bekanntmachung des Hinweises auf die Patenterteilung: **02.05.2018**
(21) Anmeldenummer: 14182052.2
(22) Anmeldetag: 22.08.2014
(51) Int. Cl.: B29C 47/10, B29C 47/76, B29C 47/36, B29C 47/68

(54) **Seitenstrombeschickungseinrichtung mit Rückwärtsentlüftung**
Sidefeeder with backward venting
Alimentateur latéral doté d'une aération arrière

(30) Priorität: 11.10.2013 DE 102013016873
(43) Veröffentlichungstag der Anmeldung: 15.04.2015
(73) Patentinhaber: Blach Verwaltungs GmbH & Co. KG, 74348 Lauffen a.N. (DE)
(72) Erfinder: Blach, Markus, 74348 Lauffen (DE); Blach, Michael, 74382 Neckarwestheim (DE)
(74) Vertreter: LS-MP von Puttkamer Berngruber Loth Spuhler

(56) Entgegenhaltungen:
- EP-A1- 0 516 936
- EP-A1- 2 353 839
- EP-A1- 2 439 044
- WO-A1-2006/042613
- WO-A1-2012/158582
- DE-A1- 3 227 983
- DE-A1- 10 201 869
- DE-U1- 20 320 505
- JP-A- 2002 210 805
- JP-A- 2002 355 880
- JP-A- 2011 245 721
- US-A- 3 742 093
- US-A- 5 283 021
- US-A1- 2008 267 003

## Beschreibung

Die Erfindung betrifft eine Extrudervorrichtung, in der Fördermaterial, zu Transportzwecken und/oder zur Weiterverarbeitung wenigstens einer in einem Extrudergehäuse angeordneten Förderschnecke zugeführt wird, wobei das Fördermaterial gasförmige Begleitstoffe, insbesondere Luft, und/oder Materialpartikel umfasst. Im Besonderen betrifft die Erfindung eine auf diesem Gebiet als SideFeeder bezeichnete Vorrichtung, die in Extruderanlagen eingesetzt wird. Der Begriff SideFeeder ist ein gängiger Hinweis auf Vorrichtungen zur Seitenstrombeschickung mit Rückwärtsentlüftung der Extruder.

Aus der EP 2 218 568 B1 geht eine Schnecken-Maschine zur Behandlung von zumindest teilweise pulverförmigem Material hervor. Die Maschine umfasst ein Gehäuse mit einer Zuführöffnung, die an einem Ende des Gehäuses angeordnet ist und der Zuführung von Material dient. Weiter ist wenigstens eine Förderschnecke in einer Gehäusebohrung vorgesehen. Darüber hinaus ist eine Dosiereinrichtung angeordnet, die der Zuführöffnung vorgeordnet ist und der Zuführung von Material dient. Zusätzlich ist ein Vakuum-Gehäuse-Abschnitt vorgesehen, der lösbar im Gehäuse ausgebildet ist. Der Vakuum-Gehäuse-Abschnitt ist eine Filtereinheit in Form eines Metall-Vlieses, das als gasdurchlässiger Wandabschnitt an einem Grundkörper auswechselbar gehalten.

Die japanische Druckschrift JP 2002-210805 beschreibt einen Extruder zur Verarbeitung feinen Pulver-Rohmaterials. Die dort beschriebene Anlage verfügt über eine Zuführeinrichtung für pulverisiertes Material. Weiterhin sind zwei Schneckenwellen beschrieben, die über einen rotierenden Antriebsmechanismus verfügen; die Anlage weist weiter einen Ausgang auf, aus dem das durch die rotierenden Schneckenwellen bereits vorverarbeitete Material in den eigentlichen Extruder eintritt. Das auf die Anmelderin zurückgehende Dokument WO 2006/042613 befasst sich mit einer Rückhalteeinrichtung an einer Gasaustrittsöffnung eines Extruders, um sogenannte schwarze Punkte aus dem zu verarbeitenden Material zu entfernen. Zu diesem Zweck wird eine Materialrückhalteeinrichtung mit einem Zwischengehäuse vorgesehen, die eine Schneckenwelle aufweist, die ihrerseits in das Zwischengehäuse eindringendes Material in ein weiter beschriebenes Verfahrensteil zurückfördert, wobei eine in das Verfahrensteil rückfördernde Steigungsrichtung bzw. eine entgegengesetzte Steigungsrichtung vorgesehen ist.

Aus dem Dokument DE 102 01 869 A1 ist eine Vorrichtung zur kontinuierlichen Aufgabe von leichten Schnipseln oder Kurzschnittfasern für die Herstellung von Kunststofferzeugnissen mittels Extruder bekannt. Es wird dabei darauf hingewiesen, dass die Aufgabe bzw. Zuführung leichter Materialien in die Schmelze eines Extruders eine Zwangszuführung erfordere, weil Schnipsel oder Kurzschnittfasern mit mäßiger bis schlechter Rieselfähigkeit zur Knäuel- und Brückenbildung in der Aufgabezogen neigen würden. Zu diesem Zweck werden mittels Unterdruckes unterhalb der Förderschnecken die Materialienschnipsel oder Kurzschnittfasern in die Schneckengänge gesaugt. Unterhalb der Schneckenfläche wird der angesaugte Material- und Luftstrom an einem Sieb getrennt und aus dem Schneckengehäuse wird unterhalb des Siebes der Luftstrom abgesaugt.

Aus dem Dokument EP 2 439 044 A1 ist eine Extrudieranlage für ein Kunststoffmaterial bekannt, das während des Extrudierens gereinigt werden soll; zu diesem Zweck sind zwei hintereinander angeordnete Einschneckenextruder eingesetzt, wobei der erste Einschneckenextruder zum Aufschmelzen des Kunststoffmaterial dient und der zweite Einschneckenextruder zum Reinigen der Schmelze ausgebildet ist. Zur Entfernung flüchtiger und nicht flüchtiger Verunreinigungen sowie zur Entnahme von Feuchtigkeit ist ein Vakuum-Entgasungssystem vorgesehen.

Die japanische Patentanmeldung JP 2002-355880 A beschreibt das Verfahren des Verwandelns überkritischen Fluids in eine Gasform mittels eines Extrusionsverfahrens.

Ferner ist aus der US-amerikanischen Anmeldung US 2008/0267003 A1 ein Extruder mit einer Mischkammer und einer gesonderten Förderkammer bekannt.

Bei der Zugabe von insbesondere pulverförmigen Stoffen im Extruder wird häufig ein SideFeeder eingesetzt. Eine solche Vorrichtung dient beim Extrusionsprozess häufig zur seitlichen Beschickung des Hauptextruders und unterstützt die Herstellung von qualitativ hochwertigen Produkten. Der Materialdurchsatz steigt bei modernen Extruderanlagen kontinuierlich an, so dass die Produktmengen, insbesondere der Zuschlagstoffe, die der Extruderanlage zugefördert werden müssen, immer größer werden. Es hat sich als nachteilig herausgestellt, dass in den Poren des Materials und insbesondere bei pulverförmigen Stoffen gasförmige Begleitstoffe wie z.B. Zwischenluft mitgefördert wird. Die gasförmigen Begleitstoffe können jedoch nicht in die Förderschnecke der Extruderanlage einströmen, da sie in der Förderschnecke nicht über vollgefüllte Zonen transportiert werden können. Die Praxis zeigt, dass die gasförmigen Begleitstoffe in das Zuführgehäuse, insbesondere in den Zuführtrichter, zurückströmen und dem Zustrom von Fördermaterial entgegenwirken, was sich negativ auf die zugeführte Menge an Material auswirken kann.

Zudem kann eine Vermischung von Material, insbesondere Zuschlagstoffen und gasförmigen Begleitstoffen, insbesondere Luft, zu einer Fluidisierung des Fördermaterials führen. Das Material wird dabei durch die aufwärts gerichtete Strömung der Luft in einen fluidisierten Zustand versetzt. Dadurch erhält das Material fluidähnliche Eigenschaften wie z.B. Wasser. Einzelne Partikel des Materials können vergleichbar mit einer Wirbelschicht durch Änderung der Fluidisierungsgeschwindigkeit zum Absinken und zum erneuten Wiederauftauchen gebracht werden.

Der Erfindung liegt daher die Aufgabe zu Grunde, das Material, das einer Extruderanlage zugeführt wird, weitestgehend von gasförmigen Begleitstoffen zu befreien.

Die Aufgabe wird dadurch gelöst, dass antriebsseitig am Extrudergehäuse des SideFeeders ein Entgasungsgehäuse angeordnet ist, in das eine Gebläseeinrichtung eine Gasströmung einstellt, die aus dem Extrudergehäuse heraus entgegen der Förderrichtung der Förderschnecke gerichtet ist mit den weiteren Merkmalen des Anspruchs 1. Soweit nicht anders erwähnt, beziehen sich die nachfolgenden Ausführungen auf die Extrudervorrichtung des SideFeeders.

Es ist eine Vorrichtung vorgesehen, bei der das Material vorzugsweise von oben in das Gehäuse des SideFeeders wenigstens einer im Extrudergehäuse angeordneten Förderschnecke zugeführt wird. Der SideFeeder selbst ist vorzugsweise am Hauptextruder seitlich angeschlossen. Die Vorrichtung wird daher auch als SideFeeder bezeichnet. Selbstverständlich kann die Zuführung des Fördermaterials auch an anderen Seiten an der Extruderanlage erfolgen.

Im Extrudergehäuse der Extruderanlage ist wenigstens eine Förderschnecke angeordnet, die das Material transportiert oder zur weiteren Verarbeitung mit weiteren Fördermaterialien vermengt, die der Extruderanlage über ein weiteres Zuführgehäuse zugeführt werden.

Die Förderschnecke besteht vorzugsweise aus einzelnen Schneckensegmenten, die auf die Tragwelle aufgefädelt werden.

Die Förderschnecke weist vorzugsweise weiterhin wenigstens eine unterschiedliche Steigung der Schneckensegmente auf.

Erfindungsgemäß schließt sich an der Seite des Extrudergehäuses, das von der Förderschnecke abgewandt ist, ein Entgasungsgehäuse an.

Erfindungsgemäß sollen die gasförmigen Begleitstoffe, insbesondere Luft, entgegen der Förderrichtung der SideFeederschnecken nach hinten abgesaugt werden. Es ist eine Gebläseeinrichtung vorgesehen, die im Entgasungsgehäuse eine Gasströmung bewirkt, die entgegen der Förderrichtung der wenigstens einen Förderschnecke gerichtet ist und die sich vom Entgasungsgehäuse in das Extrudergehäuse erstreckt. Die Gasströmung kann insbesondere eine Luftströmung sein, aber auch aus Wasserdampf bestehen oder sonstige Bestandteile in gasförmigem Aggregatszustand umfassen.

Die Gasströmung kann im Extrudergehäuse als auch im Entgasungsgehäuse ein Vakuum, einen Unterdruck oder einen Sog bewirken, der die gasförmigen Begleitstoffe vom Material trennt und einer Ablufteinrichtung zuführt.

Zur Abführung der gasförmigen Begleitstoffe aus dem Entgasungsgehäuse ist eine Ablufteinrichtung vorgesehen. Die Ablufteinrichtung ist an der von der Förderschnecke abgewandten Ende des Entgasungsgehäuses angeordnet und ermöglicht die Abführung der aus dem Fördermaterial abgetrennten gasförmigen Begleitstoffe ins Freie.

Es ist weiter möglich, dass die entgegen der Förderrichtung der Förderschnecke abgesaugten gasförmigen Begleitstoffe Partikel von Material enthalten. Soweit in dieser Beschreibung nicht ausdrücklich anders erwähnt, gilt die technische Lehre auch insoweit.

Zu erwähnen ist ferner, dass die Schnecke in einer Art Labyrinthdichtung den mitgerissenen Feststoff aus dem Gasstrom abscheidet und in Förderrichtung in Richtung Hauptextruder fördert.

Soweit im Rahmen dieser Anmeldung von einer Schnecke die Rede ist wird klargestellt, dass damit auch eine Mehrzahl von Schnecken gemeint sein soll.

Damit keine Partikel aus dem Entgasungsgehäuse in die Ablufteinrichtung gelangen, ist zwischen dem Entgasungsgehäuse und der Ablufteinrichtung ein Filter vorgesehen, der in der Gasströmung enthaltenes Material zurückhält.

Im Entgasungsgehäuse ist vorzugsweise wenigstens ein Nebenextruder vorgesehen, der im Filter festgehaltenes Material vom Filter ablöst und der Förderschnecke im Extrudergehäuse zuführt. Der Nebenextruder kann auf der Antriebswelle der Förderschnecke angeordnet sein und auf diese Weise mit der Förderschnecke in Verbindung stehen. Der Nebenextruder umfasst damit mindestens eine Schnecke und einen damit verbundenen Antrieb.

Zwischen dem Extrudergehäuse und dem Entgasungsgehäuse ist ein Filter, vorzugsweise eine Filterscheibe oder ein dichtendes Element angeordnet. Das dichtende Element ist einzeln oder in Kombination mit einer Filterscheibe auf einer Welle angeordnet.

Die Filterscheibe bewirkt, dass Material, das in der Gasströmung aus dem Extrudergehäuse in Richtung des Entgasungsgehäuses mitgerissen wird am Verlassen des Extrudergehäuses gehindert wird. Mit Hilfe des dichtenden Elements der Dichtscheibe kann der Übergang zwischen dem Extrudergehäuse und dem Entgasungsgehäuse gasdicht verschlossen werden.

Am stromabwärtigen Ende ist in Förderrichtung hinter dem Extrudergehäuse ein Hauptextruder angeordnet, der das in die Förderschnecke aufgenommene Material zur weiteren Verarbeitung übernimmt.

Der Vorteil der Erfindung liegt darin, dass gasförmige Begleitstoffe im Bereich der Förderschnecke aus dem Extrudergehäuse in rückwärtiger Richtung entgegen der Förderrichtung der Förderschnecke in ein Entgasungsgehäuse abgeführt werden und mitgerissenes Material in Richtung Hauptextruder zurückgefördert wird.

Ein weiterer Vorteil der Erfindung besteht darin, dass im Entgasungsgehäuse eine Gasströmung eingestellt wird, die entgegen der Förderrichtung der Förderschnecke gerichtet ist und sich in ihrer Sogwirkung auf das Extrudergehäuse erstreckt. Gasförmige Begleitstoffe können auf diese Weise aus dem zugeführten Fördermaterial getrennt und in rückwärtiger Richtung abgeleitet werden.

Die Erfindung erweist sich weiterhin als vorteilhaft, da die vorzugsweise wenigstens zweistufige Filtereinrichtung mit Hilfe der Filterscheibe einen Austritt von Materialpartikeln in das Entgasungsgehäuse verhindert. Materialpartikel, die z.B. auf Grund ihrer Partikelgröße in das Entgasungsgehäuse gelangt sind, werden durch den Filter vom Austritt in die Ablufteinrichtung gehindert.

Im Filter aufgefangenes Material wird dem Nebenextruder zugeführt, der die Materialpartikel vom Filter entfernt und wieder der Förderschnecke zuführt.

Die Erfindung erweist sich zusätzlich als vorteilhaft, da der Filter und/oder die Filterscheibe einer Rückspülung unterzogen werden können, indem durch Umkehrung der Strömungsrichtung der Gasströmung Materialpartikel von den Flächen des Filters und/oder der Filterscheibe abgelöst werden. Die durch die Rückspülung abgelösten Materialreste werden im Fall des Filters dem Nebenextruder zugeführt. Materialreste, die auf Grund der Rückspülung von der Filterscheibe abgelöst werden, werden direkt von der Förderschnecke erfasst und der Weiterverarbeitung zugeführt.

Das Fördermaterial umfasst Material sowie gasförmige Begleitstoffe. Unter dem Begriff Material sind dabei pulver- oder granulatförmige Füllstoffe, Additive oder auch geschnittene Fasern sowie körnige oder auch stückige Gemenge zu verstehen. Ferner kann das Material in schüttfähiger Form vorliegen; es wird hierbei in seinen Eigenschaften durch die Korngröße und die Kornverteilung sowie die Schüttdichte, den Schüttwinkel, die Feuchtigkeit und die Temperatur bestimmt.

Unter den Begriff Material fallen weiter kohäsionslose, freifließende sowie kohäsive und zusammenhaltende Materialien, die sich in einem Behältnis frei bewegen können oder nicht anderweitig in ihrer Lage gesichert sind. Die Materialien können auch Schüttgüter sein.

Material kann weiterhin Gemische in Form von Stoffgemischen sein, die wenigstens zwei Reinstoffe umfassen. Es können jedoch auch Gemenge vorliegen, deren Bestandteile sich nur miteinander vermengen lassen, jedoch nicht homogen vermischt werden können.

Zu dem Material zählen Baustoffe, wie z.B. Oberböden, Sand, Kies und Zement. Material kann jedoch auch Rohstoffe wie z.B. Erze, Kohle oder Streusalze sein. Darüber hinaus gehören hierzu Lebensmittel wie Getreidesorten, Zucker, Salz, Kaffee und Mehl. Ferner erfasst der Begriff Material, insbesondere alle Kautschuk- und Gummimaterialien oder auch gemahlene Kautschuk- und Gummikrümel, wie sie etwa für die Herstellung von Reifen oder anderen Kautschukprodukten eingesetzt werden. Die vorstehenden Beispiele sind in keiner Weise ausschließlich, sondern nur exemplarisch gemeint. Mit dem Begriff Material können Zuschlagstoffe jeglicher Art und Güte gemeint sein.

Material im Sinne dieser Erfindung wird vorstehend und nachstehend auch als Fördermaterial bezeichnet.

Im Fördermaterial, das der Förderschnecke durch das Zuführgehäuse zugeführt wird, sind gasförmige Begleitstoffe umfasst. Die Begleitstoffe können am Material anhaften oder auch in Materialporen eingeschlossen sein. Gasförmige Begleitstoffe sind vornehmlich Substanzen, deren Teilchen sich in großem Abstand voneinander frei bewegen und den verfügbaren Raum gleichmäßig ausfüllen.

Die wenigstens eine Förderschnecke und der wenigstens eine Nebenextruder sind als Schneckenförderer ausgebildet, die jeweils in einem Extrudergehäuse angeordnet sind und die motorgetrieben Material über eine bestimmte Strecke transportieren und/oder mit weiteren Zuschlagsstoffen vermengen. Auf Grund der Schwerkraft und bedingt durch die Reibung des Materials an den Schneckenwänden wird eine Drehung des Materials mit der Schnecke verhindert und das Material durch die Schneckenwindungen kontinuierlich weiter transportiert.

Die Förderschnecke und der Nebenextruder umfassen einen Schneckentrog, ein Schneckengewinde, eine Antriebswelle mit Antriebseinheit sowie einen Ein- und einen Auslauf. Gleiches gilt selbstverständlich auch für den Hauptextruder bzw. andere Extruderformen, auf die die Erfindung anwendbar ist.

Die Förderschnecke weist eine Schnecke, vorzugsweise mit dichtkämmendem Abstreifprofil nach Erdmengerl oder aber mit Standardprofil auf. Die Steigung der Schnecke ist dabei größer als die Steigung der Schnecke des Nebenextruders, der im Entgasungsgehäuse angeordnet ist. Die Steigung der jeweiligen Schnecke kann mehrfach unterschiedlich ausgebildet sein.

Die kleinere Steigung der Schnecke des Nebenextruders bewirkt, dass an den zahlreich vorhandenen Umlenkstellen des Nebenextruders möglichst viel Material, insbesondere Pulver abgeschieden und von der Schnecke des Nebenextruders wieder in Richtung der Förderschnecke gefördert werden kann. Die Schnecken, die Schubkanten und vergleichsweise kleine Steigungen aufweisen ermöglichen eine effektive Abreinigung des porösen Materials, insbesondere des Sintermaterials von den Filterflächen. Da nur ein sehr kleiner Materialstrom am Filtermaterial entlang geleitet wird, kann die Gefahr, dass Filterflächen zusetzen und verstopfen, wirksam vermieden werden.

Die Elemente mit Schubkante haben im Allgemeinen ein größeres freies Volumen, als die entsprechenden Elemente mit "Dichtprofil". Dies ergibt zunächst ein größeres Fördervolumen.

Gleichermaßen können erfindungsgemäß können aber auch Schnecken für den Nebenextruder vorgesehen sein, die eine größere Steigung aufweisen.

Vorteilhaft kann die Steigung im Bereich von 30-90° liegen; besonders vorteilhaft ist es, einen Bereich von 40-60° und ganz besonders vorteilhaft, einen Bereich von zirka 45° vorzusehen.

Diese Bereichsangaben gelten auch für die Förderschnecke.

Eine zusätzlicher Einsatz von Metallvlies an Filtern und/oder Filterscheiben, die aufwändig gestützt werden müssen, kann unterbleiben, ist aber nicht ausgeschlossen.

An der Förderschnecke und/oder am Nebenextruder ist eine Schubkante angeordnet, die im Fall der Förderschnecke den Förderdurchsatz erhöht. Im Fall des Nebenextruders löst die Schubkante an der Filterscheibe festgesetztes Material ab und fördert es dem Extrudergehäuse zu. Es kann wenigstens eine Filterscheibe vorgesehen sein, die auf der Antriebswelle angeordnet ist.

Besonders vorteilhaft im Bereich des Einzugs und insbesondere auch im Bereich der Filterabstreifung ist es, dass im Längsschnitt die Schneckenkante etwa senkrecht zur Filterfläche steht, also das anhaftende Produkt nicht in den Spalt "hineingeschoben", sondern eher von der Filterfläche abgestreift wird. Der in Bezug genommene Spalt ist dabei zwischen der Schnecke und dem Filter angeordnet.

Weiter vorteilhaft ist es, wenn im Verlauf der SideFeederschnecke das Schubkantenprofil nach der Einfüllöffnung zunächst in ein normales Dichtprofil überführt wird. Hierbei erfolgt eine erste Volumenreduktion von ca. 20 - 35 %.

Dann wird die Schneckensteigung reduziert, um in Richtung des Hauptextruders das Material zu kompaktieren und mit einem gewissen Druck in den Hauptextruder hineinfördern zu können.

Material, das am Filter und/oder an der Filterscheibe abgelagert ist, kann unter erhöhtem Druck und unter Zuführung von Wärmeenergie versintern. Beim Sintern verbleiben die Temperaturen des Materials unterhalb der Schmelztemperatur, so dass die Gestalt des Materials erhalten bleibt. Das Material wird jedoch verdichtet, da die Partikel komprimiert werden und die Porenräume aufgefüllt werden.

Die vom Filter und/oder von der Filterscheibe abgelösten Materialreste werden von der Schnecke des Nebenextruders aus dem Entgasungsgehäuse der im Extrudergehäuse angeordneten Förderschnecke zugeführt. Dabei ist es vorteilhaft, im Bereich des Entgasungsgehäuses eine Austragsvorrichtung vorzusehen und zwischenzuschalten, die die abgelösten Materialreste zunächst in einen vorzugsweise zusätzlichen Auffangbehälter überführt. Von diesem Auffangbehälter werden die Materialreste der im Extrudergehäuse angeordneten Förderschnecke zugeführt.

Für die Ausgestaltung der Austragsvorrichtung, des Auffangbehälters und der Zuführeinrichtung stehen die verschiedensten konstruktiven Ausgestaltungen zur Verfügung. Der Fachmann wird eine für seine Zwecke geeignete Ausführungsform ohne Schwierigkeiten auffinden.

Die Förderschnecke, der wenigstens eine Nebenextruder und der wenigstens eine weitere Hauptextruder können vorzugsweise ein Zweiwellenextruder oder ein Mehrwellenextruder sein. Sie können insbesondere RingExtruder sein.

Zur Ausbildung von Funktionszonen können an wenigstens einer Förderschnecke und/oder an der Schnecke des Nebenextruders Segmente vorgesehen sein. Schnecken mit einer kleinen Steigung und Schubkanten dienen am Nebenextruder der Abreinigung der Filterflächen. Schnecken mit großer Steigung und Schubkanten begünstigen an der Förderschnecke ein hohes Fördervolumen. Der Übergang auf das Normalprofil kombiniert mit einer Verdichtung mit kleiner Steigung erzielt eine optimale Förderung im Bereich des Hauptextruders.

Das Zuführgehäuse und/oder die Ablaufeinrichtung können umfassende oder partielle Kühleinrichtungen aufweisen. Gleichzeitig und/oder ergänzend können zur Temperierung des Materials Heizeinrichtungen vorgesehen sein, die der Temperierung einzelner Materialkomponenten dienen.

Die Kühleinrichtungen können zur Abkühlung von Materialkomponenten eingesetzt werden.

Es ist auch vorstellbar, Filter und/oder Filterscheiben abzukühlen, um ein Anschmelzen von Materialpartikeln am Filter und/oder an der Filterscheibe zu verhindern. Das Extrudergehäuse kann bereits gekühlt werden, während das Zuführgehäuse noch heiß ist, um das Produkt vorzuwärmen und damit den Materialdurchsatz weiter steigern zu können.

Das Entgasungsgehäuse weist eine Einrichtung zur Herstellung einer Gasströmung auf, die im Extrudergehäuse und im Entgasungsgehäuse zu einem Vakuum oder zu einem Unterdruck führt. Die Gasströmung kann durch ein Gebläse oder auch durch jede andere Einrichtung hervorgerufen werden, die eine Gasströmung herbeiführen kann.

Die Gasströmung ist innerhalb des Entgasungsgehäuses entgegen der Förderrichtung der Förderschnecke ausgerichtet. Sie saugt die gasförmigen Begleitstoffe aus dem Extrudergehäuse heraus und führt sie durch das Entgasungsgehäuse der Ablufteinrichtung zu. Ein Zurückströmen der gasförmigen Begleitstoffe entgegen der Richtung, in der das Material in das Zuführgehäuse eingeführt wird, unterbleibt. Die zurückströmenden Luftmengen behindern somit nicht länger den Materialzustrom in das Zuführgehäuse.

Die Gasströmungsrichtung kann umgekehrt werden, so dass der wenigstens eine Filter und/oder die wenigstens eine Filterscheibe durch eine Druckluftspühlung gereinigt und von anhaftendem Material befreit werden können. Die Filterscheibe kann von hinten mit einem schmalen Luftspülbalken versehen sein, die die Filterscheibe rückspült. Dies kann kontinuierlich oder intermittierend erfolgen.

Die Ablufteinrichtung kann seitlich am Entgasungsgehäuse oder an der Oberseite des Entgasungsgehäuses angeordnet sein.

Der Filter und/oder die Filterscheibe können aus Sintermaterial gefertigt sein. Selbstverständlich ist es auch denkbar, dass der wenigstens eine Filter und/oder die wenigstens eine Filterscheibe metallene Werkstoffe und/oder nicht metallene Werkstoffe umfasst.

Weitere Merkmale, Einzelheiten und Vorteile der Erfindung ergeben sich aus der nachfolgenden Beschreibung eines Ausführungsbeispiels. Hierbei zeigen:
- Fig. 1: eine Extruderanlage in Seitenansicht mit Extrudergehäuse, Hauptextruder und Entgasungsgehäuse,
- Fig. 2: die Extruderanlage nach Fig. 1 von oben gesehen mit seitlich angeordneter Ablufteinrichtung und
- Fig. 3: ein Extrudergehäuse für einen Doppelwellenextruder mit Filterscheibe und dichtendem Element.
- Fig. 4: eine Extruderanlage nach Fig. 1 mit Ablufteinrichtung nach oben (Schnitt-Vorderansicht)
- Fig. 5: eine Extruderanlage nach Fig. 1 mit Ablaufteinrichtung nach oben (Schnitt-Draufsicht)
- Fig. 6: zeigt Bestandteile der Förderschnecke sowie der Schnecke des Nebenextruders mit unterschiedlichen Steigungen sowie mit Schubkantenprofil und normalem Dichtprofil.

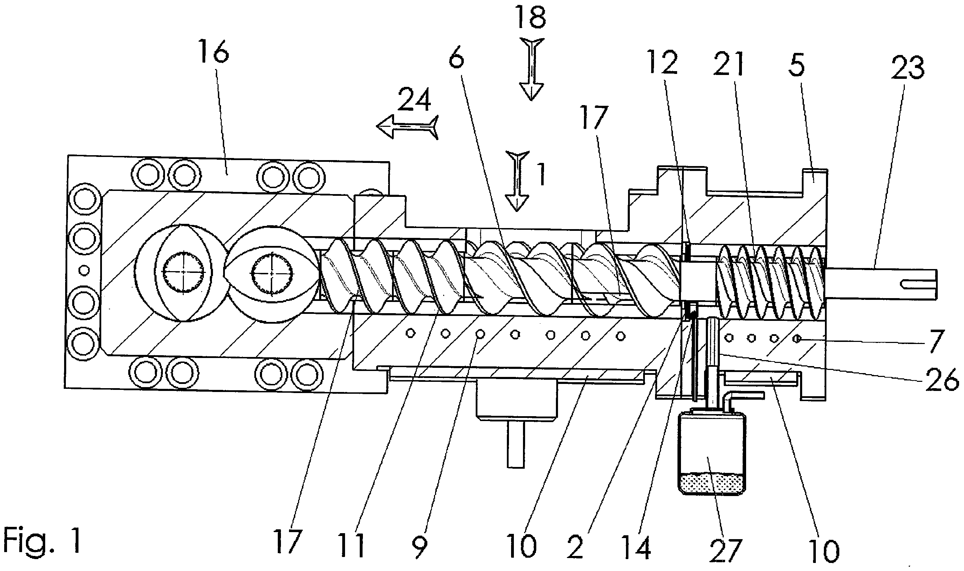

Fig. 1 zeigt eine Extruderanlage mit einem Extrudergehäuse 15, das zwischen einem Hauptextruder 16 und einem Entgasungsgehäuse 5 angeordnet ist.

Die Förderschnecken 17 weisen ein Standardprofil 11 auf, an dem Schubkanten 6 angeordnet sind. Relativ zum Verlauf der Förderschnecke 17 sind unterhalb der Förderschnecke 17 im Extrudergehäuse 15 je eine Heizeinrichtung 10 und eine Kühlung 9 vorgesehen, die das im Extrudergehäuser 15 befindliche Material 18 erwärmen bzw. abkühlen. Die Heizung 10 erfolgt elektrisch und die Kühlung 9 umfassen Rohrleitungen, in denen Fluide entlanggeführt werden.

Oben am Extrudergehäuse 15 ist die Zuführöffnung 1 angeordnet, durch das das Material 18 den Förderschnecken 17 zugeführt wird.

Im Entgasungsgehäuse 5 ist eine Gebläseeinrichtung 2 vorgesehen, die im Entgasungsgehäuse 5 eine Gasströmung einstellt, die gasförmige Begleitstoffe aus dem Extrudergehäuse 15 in das Entgasungsgehäuse 5 absaugt und von dort einer Ablufteinrichtung 20 zuführt, die die von Material 18 befreite Gasströmung nach außen freisetzt. Die Ablufteinrichtung 20 ist entgegen der Förderrichtung 24 der Förderschnecke 17 angeordnet.

Die Gasströmung, die vom Extrudergehäuse 15 in das Entgasungsgehäuse 5 gelangt, enthält Materialpartikel. Die Materialpartikel werden in einem ersten Schritt in den Schneckenelementen, die entgegen der Luftströmung fördern, in den Umlenkzonen abgeschieden und in den Prozessraum zurückgeführt und in einer nächsten Stufe von einer Filterscheibe 12 abgefangen, die zwischen dem Extrudergehäuse 15 und dem Entgasungsgehäuse 5 angeordnet sein kann.

Die so vorgereinigte Begleitstoff Gasströmung wird nach Durchströmen des Entgasungsgehäuses 5 und vor Eintritt in die Ablufteinrichtung 20 von einem Filter 4 von noch in der Gasströmung verbliebenen Materialpartikeln befreit.

Im Entgasungsgehäuse 5 ist wenigstens ein Nebenextruder 22 vorgesehen, der auf einer Antriebswelle 23 der Förderschnecke 17 sitzt. Der Nebenextruder ist vorzugsweise eine Schnneckenwelle.

Der Nebenextruder 22 weist eine Schubkantenschnecke 21 auf, die mit Drehung des Nebenextruders 22 Materialreste von der Seite des Filters 4 befreit, die dem Entgasungsgehäuse 5 zugewandt ist.

Die vom Filter 4 abgelösten Materialreste werden vom Nebenextruder 22 aus dem Entgasungsgehäuse 5 der im Extrudergehäuse 15 angeordneten Förderschnecke 17 zugeführt.

Besonders vorteilhaft im Bereich des Einzugs und insbesondere auch im Bereich der Filterabstreifung ist es, dass im Längsschnitt die Schneckenkante etwa senkrecht zur Filterfläche steht, also das anhaftende Produkt nicht in den Spalt "hineingeschoben", sondern eher von der Filterfläche abgestreift wird.

Weiter vorteilhaft ist es, wenn im Verlauf der SideFeederschnecke das Schubkantenprofil nach der Einfüllöffnung zunächst in ein normales Dichtprofil überführt wird. Hierbei erfolgt eine erste Volumenreduktion von ca. 20 - 35 %.

Dann wird die Schneckensteigung reduziert, um in Richtung des Hauptextruders das Material zu kompaktieren und mit einem gewissen Druck in den Hauptextruder hineinfördern zu können.

Die Schnecke des Nebenextruders 22 weist eine kleinere Steigung auf, als die Schnecke der Förderschnecke 17.

Zwischen dem Extrudergehäuse 15 und dem Entgasungsgehäuse 5 ist die Filterscheide 12 erkennbar.

Zur Erhöhung des Förderdurchsatzes weist die Förderschnecke 17 im Bereich der Produktzugabe eine große Steigung sowie Schubkantenschnecken 6 auf.

Relativ zur Förderrichtung 24 weist das Entgasungsgehäuse 5 eine Kühlung 7 und eine Heizeinrichtung 10 auf.

In der Ablufteinrichtung 20 ist eine Druckluftspülungseinrichtung 3 vorgesehen, die unter Umkehrung der Strömungsrichtung der Gasströmung in Förderrichtung 24 Materialreste, die am Filter 4 und/oder an der Filterscheibe 12 anhaften, von diesen befreien. Die Materialreste werden von dem Filter 4 dem Nebenextruder 22 zugeführt und von diesem in das Extrudergehäuse 15 transportiert. Materialreste, die an der Filterscheibe 12 anhaften, werden von der Druckluftspülung 14 direkt den Förderschnecken 17 zur weiteren Verarbeitung zugeführt.

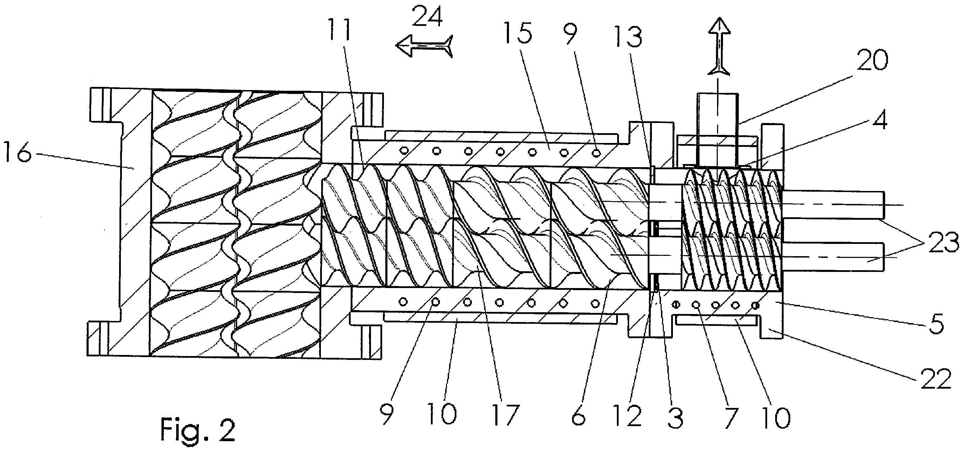

Fig. 2 zeigt in Draufsicht die Extruderanlage nach Fig. 1. In der Ansicht links ist der Hauptextruder 16 abgebildet, an den sich entgegen der Förderrichtung 24 das Extrudergehäuse 15 mit den Förderschnecken 17 anschließt. Stromaufwärts in Förderrichtung 24 ist neben dem Extrudergehäuse 15 das Entgasungsgehäuse 5 dargestellt. Im Extrudergehäuse 15 sind die Förderschnecke 17 als Doppelwellenextruder gezeigt, die jeweils von einer Antriebswelle 23 angetrieben werden. Auf den Antriebswellen 23 sitzen stromaufwärts entgegen der Förderrichtung 24 die Nebenextruder 22 im Entgasungsgehäuse 5.

Die Steigung der Förderschnecken 17 ist nach Darstellung der Fig. 2 größer, als die Steigung der Schnecken der Nebenextruder 22.

Das Extrudergehäuse 15 umfasst eine Kühlung 9 sowie eine Heizeinrichtung 10, deren Kühl- bzw. Heizrohre entsprechende erhitzte bzw. abgekühlte Fluide befördern. Die Förderschnecke 17 weisen in der Darstellung der Fig. 2 ein Standardprofil 11 auf. Im Übergang zwischen dem Extrudergehäuse 15 und dem Entgasungsgehäuse 5 sitzt auf der einen Antriebswelle 23 ein dichtendes Element 13, das das Extrudergehäuse 15 gegenüber dem Entgasungsgehäuse 5 abdichtet.

Im Bereich der Antriebswelle 23 der benachbarten Förderschnecke 17 ist eine Filterscheibe 12 dargestellt, die die Materialpartikel, die in der Gasströmung enthalten sind, vor dem Eintritt in das Entgasungsgehäuse 5 abfiltert und aus der Gasströmung entfernt.

Das Entgasungsgehäuse 5 in Fig. 2 rechts im Bild, zeigt die Nebenextruder 22, die Materialreste vom Filter 4 entfernen und dem Extrudergehäuse 15 zuführen.

Im Bereich der Filterscheibe 12 ist in Fig. 2 eine Druckluftspülungseinrichtung 3 vorgesehen, die zur separaten Reinigung der Filterscheibe 12 dient.

Fig. 1 und 2 zeigen einen Auslass 26 für die Abführung von abgelösten, insbesondere abgeschabten Filterrückständen. Von diesem gehen die Materialreste in einen Auffangbehälter 27 und von diesem in nicht dargestellter Weise zur Förderschnecke 17.

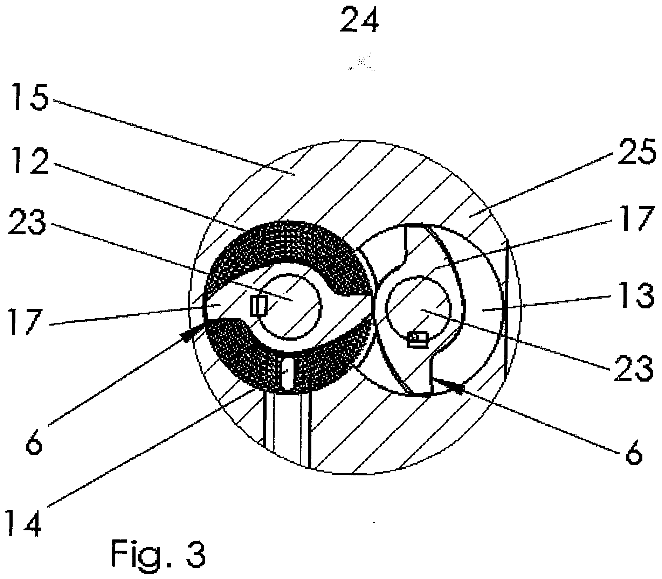

Fig. 3 zeigt das Extrudergehäuse 15 in Förderrichtung 24 gesehen im Bereich eines Flansches 25, der der Verbindung des Extrudergehäuses 15 mit dem Entgasungsgehäuse (nicht gezeigt) dient. Im Extrudergehäuse 15 sind die Doppelwellen-Förderschnecke 17 dargestellt. Stirnseitig an der in Fig. 3 linken Förderschnecke 17 ist die Filterscheibe 12 gezeigt, sowie eine Druckluftleiste 14, die der Rückspülung der Filterscheibe 12 dient.

Die rechte Förderschnecke 17 in der Fig. 3 ist durch ein dichtendes Element 13 gegenüber dem Entgasungsgehäuse 5 (nicht gezeigt) dichtend verschlossen.

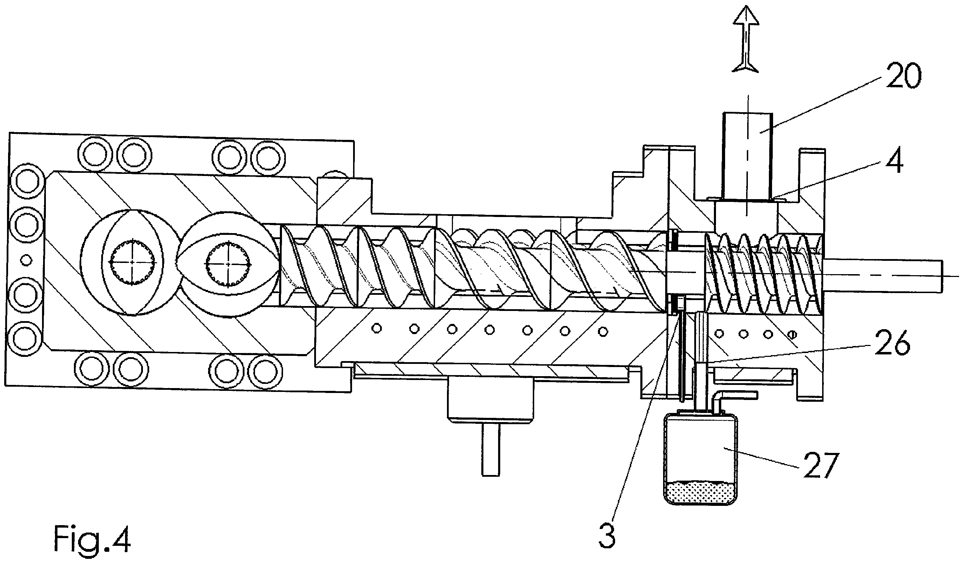

Fig. 4 zeigt die erfindungsgemäße Extruderanlage in einer Schnitt-Vorderansicht, wobei die Ablufteinrichtung 20 nach oben hin gerichtet ist.

In dieser Ansicht sind auch gut die Druckluftspüleinrichtung 3 sowie der Filter 4 zu erkennen. Ebenso sind der Auslass 26 für die Materialreste bzw. Materialpartikel sowie der Auffangbehälter 27 für die Materialpartikel zu erkennen.

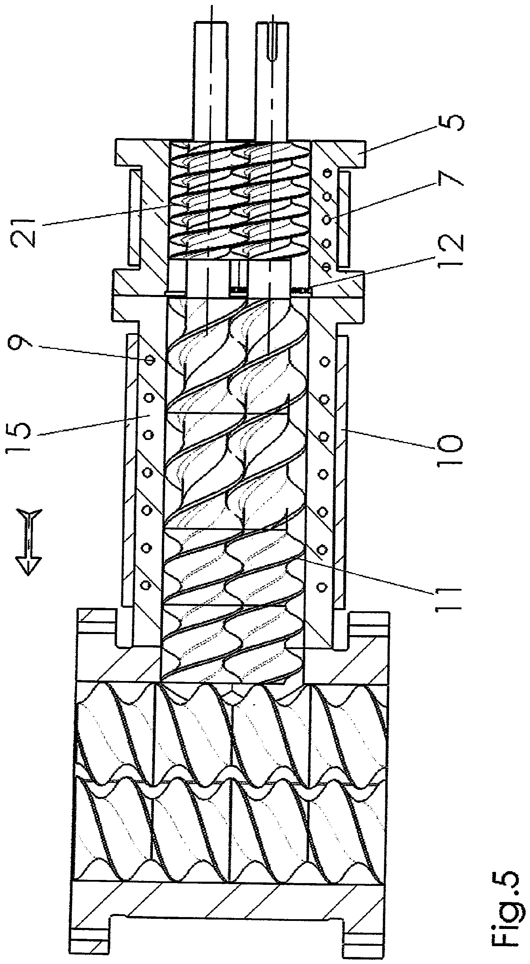

Die Fig. 5 zeigt die erfindungsgemäße Extruderanlage mit der Ablufteinrichtung 20, die nach oben hin ausgerichtet ist, in der Schnittdarstellung der Draufsicht. Zu erkennen ist die Steigung der Förderschnecke 17 im Bereich des Extrudergehäuses 15, wobei eine Unterschiedlichkeit der Steigung der Förderschnecke 17 in Richtung Hauptextruder erkennbar wird. Ferner zeigt die Fig. 5 die Anordnung der Heizung 10, sowie der Filterscheibe 12, in dem Entgasungsgehäuse 5. Weiterhin ist erkennbar, dass die Schnecke des Nebenextruders 22 über ein Schubkantenprofil 21 verfügt. Die Kühlung des Entgasungsgehäuses 5 ist mit der Bezugsziffer 7 deutlich gemacht.

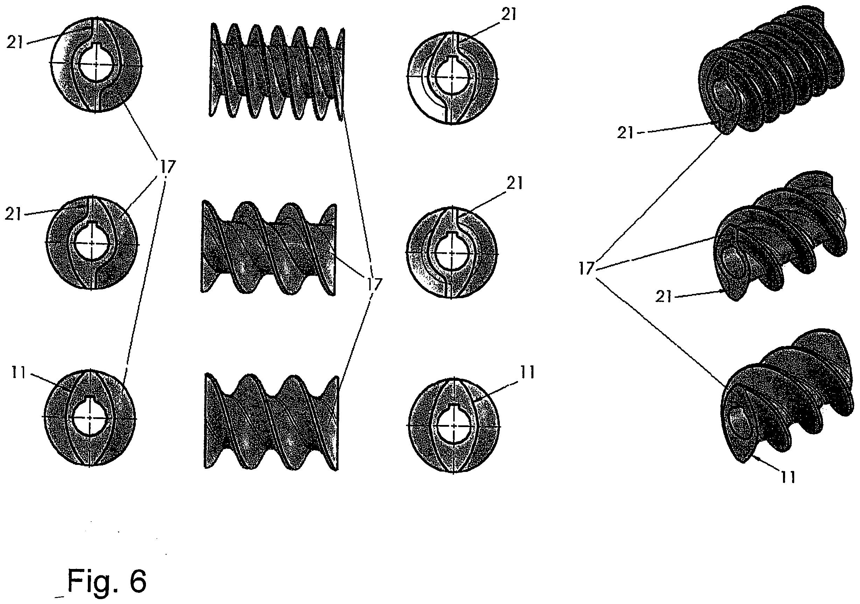

Fig. 6 zeigt Ausschnitte der einsetzbaren Schnecken im Hauptextruder 16, im Extrudergehäuse 15 sowie im Nebenextruder 22. Die Schnecken zeigen eine unterschiedliche Steigung, die im konkreten Ausführungsbeispiel bei etwa 45° bzw. bei etwa 90° liegt. Die Förderschnecke 17, aber auch die Schnecke des Nebenextruders 22 können entweder ein Schubkantenprofil 21 oder ein Standardprofil 11 aufweisen. Die Elemente mit Schubkante haben generell ein größeres freies Volumen als die Elemente mit dem Standardprofil bzw. Dichtprofil. Dies ergibt zunächst ein größeres Fördervolumen. Im Bereich des Einzugs und insbesondere auch im Bereich der Filterabstreifung steht die Schneckenkante im Längsschnitt etwa senkrecht zur Filterfläche, so dass das anhaftende Produkt nicht in den Spalt "hineingeschoben", sondern eher von der Filterfläche abgestreift wird. Im Verlauf insbesondere der Sidefeederschnecke 17 soll zunächst nach Einfüllöffnung das Schubkantenprofil in ein normales Dichtprofil überführt werden. Hierbei erfolgt eine erste Volumenreduktion um ca. 20-35 %. Dann wird die Schneckensteigung reduziert, um in Richtung des Hauptextruders das Material zu kompaktieren und mit einem gewissen Druck in den Hauptextruder hineinfördern zu können. Die diesbezügliche Ausgestaltung der Förderschnecke 17 ergibt sich dabei auch aus den Figuren 1, 2, 4, 5.

### Bezugsziffernliste

1. Zuführöffnung
2. Gebläseeinrichtung
3. Druckluftspülungseinrichtung
4. Filter
5. Entgasungsgehäuse
6. Schubkante der Förderschnecke
7. Kühlung des Entgasungsgehäuses
8. (freibleibend)
9. Kühlung Zuführgehäuse
10. Heizeinrichtung
11. Standardprofil
12. Filterscheibe
13. dichtendes Element
14. Druckluftleiste
15. Extrudergehäuse
16. Hauptextruder
17. Förderschnecke
18. Material
19. Ablufteinrichtung
20. Schubkante
21. Nebenextruder
22. Antriebswelle der Förderschnecke
23. Förderrichtung
24. Flansch des Extrudergehäuses
25. Auslass für Materialreste
26. Auffangbehälter für Materialrest

## Patentansprüche

1. Vorrichtung zur Seitenstrombeschickung eines Haupt-Extruders (16) mit Material (18), das gasförmige Begleitstoffe enthält, beinhaltend
ein Extrudergehäuse (15),
wenigstens eine Förderschnecke (17), die in dem Extrudergehäuse (15) angeordnet ist,
wobei das Material (18) der wenigstens einen Förderschnecke (17) zugeführt wird, und wobei sich an der Seite des Extrudergehäuses (15), das von der Förderschnecke (17) abgewandt ist, ein Entgasungsgehäuse (5) anschließt, und
eine Gebläseeinrichtung (2) vorgesehen ist, die im Entgasungsgehäuse (5) eine Gasströmung bewirkt, die entgegen der Förderrichtung (24) der wenigstens einen Förderschnecke gerichtet ist und sich in ihrer Sogwirkung auf das Extrudergehäuse (15) erstreckt, und
die Vorrichtung so ausgestaltet ist,
dass im Bereich der Förderschnecke gasförmige Begleitstoffe aus dem Extrudergehäuse in rückwärtiger Richtung entgegen der Förderrichtung der Förderschnecke in das Entgasungsgehäuse (5) abführbar sind und mitgerissenes Material in Richtung Hauptextruder (16) zurückförderbar ist, und
dass das Entgasungsgehäuse (5) eine Ablufteinrichtung (20) aufweist, die entgegen der Förderrichtung (24) der Förderschnecke (17) angeordnet ist,
**dadurch gekennzeichnet, dass**
die Ablufteinrichtung (20) gegen das Entgasungsgehäuse (5) durch einen Filter (4) abgegrenzt ist,
wobei der Filter (4) so ausgestaltet ist, dass er einer Rückspülung unterziehbar ist, indem durch Umkehrung der Strömungsrichtung der Gasströmung Materialpartikel von Flächen des Filters abgelöst werden.

2. Vorrichtung nach Anspruch 1, **dadurch gekennzeichnet, dass** im Extrudergehäuse (15) und/oder im Entgasungsgehäuse (5) auf Grund der entgegen der Förderrichtung (24) der Förderschnecke (17) gerichteten Ausrichtung der Luftströmung ein Vakuum vorliegt.

3. Vorrichtung nach Anspruch 1, **dadurch gekennzeichnet, dass** im Extrudergehäuse (15) und/oder im Entgasungsgehäuse (5) auf Grund der entgegen der Förderrichtung (24) der Förderschnecke (17) gerichteten Ausrichtung der Luftströmung ein Unterdruck vorliegt.

4. Vorrichtung nach einem oder mehreren der vorhergehenden Ansprüche, **gekennzeichnet durch** eine Zuführöffnung (1), die der Zuführung des Materials (18) dient.

5. Vorrichtung nach einem oder mehreren der vorhergehenden Ansprüche, **dadurch gekennzeichnet, dass** das Entgasungsgehäuse (5) einen Nebenextruder (22) aufweist, der der Rückführung des Materials zur Förderschnecke (17) dient.

6. Vorrichtung nach einem oder mehreren der vorhergehenden Ansprüche, **dadurch gekennzeichnet, dass** die Förderschnecke (17) eine größere Steigung aufweist, als die Schnecke des Nebenextruders (22).

7. Vorrichtung nach einem oder mehreren der vorhergehenden Ansprüche, **dadurch gekennzeichnet, dass** die Förderschnecke (17) und/oder der Nebenextruder (22) je wenigstens eine Schubkante (6; 21) aufweist/aufweisen.

8. Vorrichtung nach einem oder mehreren der vorhergehenden Ansprüche, **dadurch gekennzeichnet, dass** das Extrudergehäuse (15) durch eine Filterscheibe (12) und/oder durch ein dichtendes Element (13) vom Entgasungsgehäuse (5) abgegrenzt ist.

9. Vorrichtung nach einem oder mehreren der vorhergehenden Ansprüche, **dadurch gekennzeichnet, dass** die Zuführöffnung (1) und/oder die Ablufteinrichtung (20) und/oder der Filter (4) und/oder die Filterscheibe (12) und/oder das Entgasungsgehäuse (5) kühlbar oder temperierbar sind.

10. Vorrichtung nach einem oder mehreren der vorhergehenden Ansprüche, **dadurch gekennzeichnet, dass** zum Antrieb der Förderschnecke (17) und des Nebenextruders (22) eine gemeinsame Antriebswelle (23) angeordnet ist.

11. Vorrichtung nach einem oder mehreren der vorhergehenden Ansprüche, **dadurch gekennzeichnet, dass** die Förderschnecke (17) und/oder der Nebenextruder (22) ein Einwellenextruder oder ein Mehrwellenextruder oder ein Ringextruder ist/sind.

## Claims

1. Device for side-stream feeding of a main extruder (16) with material (18) containing gaseous accompanying substances, comprising
an extruder barrel (15),
at least one screw conveyor (17), which is arranged in the extruder barrel (15),
wherein the material (18) is fed to the at least one screw conveyor (17),
and wherein a degassing barrel (5) is attached to the side of the extruder barrel (15) facing away from the screw conveyor (17), and a fan device (2) is provided generating a gas flow in the degassing barrel (5), which is directed in the opposite direction to the conveying direction (24) of the at least one screw conveyor and extends in its suction effect to the extruder barrel (15), and
the device is configured in such a way
that, in the region of the screw conveyor, gaseous accompanying substances can be discharged from the extruder barrel rearwards in the opposite direction to the conveying direction of the screw conveyor into the degassing barrel (5) and entrained material can be conveyed back in the direction of the main extruder (16), and
that the degassing barrel (5) has an exhaust air device (20) which is arranged in the opposite direction to the conveying direction (24) of the screw conveyor (17), **characterized in that**
the exhaust air device (20) is separated from the degassing barrel (5) by a filter (4), wherein the filter (4) is configured in such a way that it can be subjected to backwashing by removing material particles from surfaces of the filter by reversing the flow direction of the gas flow.

2. Device according to claim 1, **characterized in that** a vacuum is present in the extruder barrel (15) and/or in the degassing barrel (5) due to the orientation of the air flow directed in the opposite direction to the conveying direction (24) of the screw conveyor (17).

3. Device according to claim 1, **characterized in that** a negative pressure is present in the extruder barrel (15) and/or in the degassing barrel (5) due to the orientation of the air flow directed in the opposite direction to the conveying direction (24) of the screw conveyor (17).

4. Device according to one or more of the preceding claims, **characterized by** a feed opening (1) serving to feed the material (18).

5. Device according to one or more of the preceding claims, **characterized in that** the degassing barrel (5) has an auxiliary extruder (22) serving to refeed the material to the screw conveyor (17).

6. Device according to one or more of the preceding claims, **characterized in that** the screw conveyor (17) has a greater pitch than the screw of the auxiliary extruder (22).

7. Device according to one or more of the preceding claims, **characterized in that** the screw conveyor (17) and/or the auxiliary extruder (22) each have at least one pushing edge (6; 21).

8. Device according to one or more of the preceding claims, **characterized in that** the extruder barrel (15) is separated from the degassing barrel (5) by a filter disc (12) and/or by a sealing element (13).

9. Device according to one or more of the preceding claims, **characterized in that** the feed opening (1) and/or the exhaust air device (20) and/or the filter (4) and/or the filter disc (12) and/or the degassing barrel (5) can be cooled or temperature-controlled.

10. Device according to one or more of the preceding claims, **characterized in that** a common drive shaft (23) is arranged for driving the screw conveyor (17) and the auxiliary extruder (22).

11. Device according to one or more of the preceding claims, **characterized in that** the screw conveyor (17) and/or the auxiliary extruder (22) is/are a single-shaft extruder or a multi-shaft extruder or a ring extruder.

## Revendications

1. Dispositif d'alimentation par courant latéral d'une extrudeuse principale (16) en matériau (18) qui contient des matières secondaires gazeuses, comportant un boîtier d'extrudeuse (15),
au moins une vis transporteuse (17) qui est agencée dans le boîtier d'extrudeuse (15),
le matériau (18) étant amené à ladite au moins une vis transporteuse (17) et un boîtier de dégazage (5) se raccordant au côté du boîtier d'extrudeuse (15) qui est détourné de la vis transporteuse (17), et
un dispositif de ventilation (2) étant prévu pour engendrer un flux gazeux dans le boîtier de dégazage (5), lequel est orienté à l'opposé de la direction de transport (24) de ladite au moins une vis transporteuse et s'étend, dans son effet de succion, vers le boîtier d'extrudeuse (15), et
le dispositif étant configuré de telle sorte
que dans la zone de la vis transporteuse, des matières secondaires gazeuses peuvent être évacuées hors du boîtier d'extrudeuse en direction arrière à l'opposé de la direction de transport de la vis transporteuse dans le boîtier de dégazage (5), et du matériau entraîné peut être transporté en sens inverse en direction de l'extrudeuse principale (16), et
que le boîtier de dégazage (5) présente un dispositif d'évacuation d'air (20) qui est agencé à l'opposé de la direction de transport (24) de la vis transporteuse (17), **caractérisé en ce que**
le dispositif d'évacuation d'air (20) est délimité vis-à-vis du boîtier de dégazage (5) par un filtre (4),
le filtre (4) étant configuré de telle sorte qu'il peut être soumis à un rétrolavage par le fait que par l'inversion de la direction d'écoulement du flux de gaz, des particules de matériau sont détachées de surfaces du filtre.

2. Dispositif selon la revendication 1, **caractérisé en ce que** dans le boîtier d'extrudeuse (15) et/ou dans le boîtier de dégazage (5) se trouve un vide en raison de l'orientation du flux d'air orienté à l'opposé de la direction de transport (24) de la vis transporteuse (17).

3. Dispositif selon la revendication 1, **caractérisé en ce que** dans le boîtier d'extrudeuse (15) et/ou dans le boîtier de dégazage (5) se trouve une dépression en raison de l'orientation du flux d'air orienté à l'opposé de la direction de transport (24) de la vis transporteuse (17).

4. Dispositif selon l'une ou plusieurs des revendications précédentes, **caractérisé par** une ouverture d'alimentation (1) qui sert à l'alimentation en matériau (18).

5. Dispositif selon l'une ou plusieurs des revendications précédentes, **caractérisé en ce que** le boîtier de dégazage (5) présente une extrudeuse secondaire (22) qui sert au renvoi du matériau à la vis transporteuse (17).

6. Dispositif selon l'une ou plusieurs des revendications précédentes, **caractérisé en ce que** la vis transporteuse (17) présente un pas de vis plus grand que la vis de l'extrudeuse secondaire (22).

7. Dispositif selon l'une ou plusieurs des revendications précédentes, **caractérisé en ce que** la vis transporteuse (17) et/ou l'extrudeuse secondaire (22) présente/nt chacune au moins une arête de poussée (6 ; 21).

8. Dispositif selon l'une ou plusieurs des revendications précédentes, **caractérisé en ce que** le boîtier d'extrudeuse (15) est délimité vis-à-vis du boîtier de dégazage (5) par une plaque filtrante (12) et/ou par un élément d'étanchéité (13).

9. Dispositif selon l'une ou plusieurs des revendications précédentes, **caractérisé en ce que** l'ouverture d'alimentation (1) et/ou le dispositif d'évacuation d'air (20) et/ou le filtre (4) et/ou la plaque filtrante (12) et/ou le boîtier de dégazage (5) peuvent être refroidis ou tempérés.

10. Dispositif selon l'une ou plusieurs des revendications précédentes, **caractérisé en ce qu'**un arbre d'entraînement (23) commun est agencé pour l'entraînement de la vis transporteuse (17) et de l'extrudeuse secondaire (22).

11. Dispositif selon l'une ou plusieurs des revendications précédentes, **caractérisé en ce que** la vis transporteuse (17) et/ou l'extrudeuse secondaire (22) est/sont une extrudeuse à une vis ou une extrudeuse à plusieurs vis ou une extrudeuse annulaire.
